Europäisches Patentamt

European Patent Office

Office européen des brevets

(11) Publication number: **0 401 803**
**A2**

# (12) EUROPEAN PATENT APPLICATION

(21) Application number: **90110732.6**

(22) Date of filing: **06.06.90**

(51) Int. Cl.⁵: **G06F 13/38, G06F 3/12, G06F 13/12**

(30) Priority: **06.06.89 US 361983**

(43) Date of publication of application:
**12.12.90 Bulletin 90/50**

(84) Designated Contracting States:
**AT BE CH DE FR GB IT LI LU NL SE**

(71) Applicant: **COMTROL CORPORATION**
**2675 Patton Road, P.O. Box 64750**
**St. Paul, Minnesota 55164(US)**

(72) Inventor: **Strunc, Gerald R.**
**7650 Peony Lane**
**Maple Grove, Minnesota 55369(US)**

(74) Representative: **Betten & Resch**
**Reichenbachstrasse 19**
**D-8000 München 5(DE)**

(54) Multiple remote graphic work stations.

(57) A remote work station for interactive use in a multi-user time-shared environment with a host computer. The remote work station and host computer pass information via a high speed link with circuits in both the host computer and remote work station for converting the serial information to and from a parallel format used on the host bus and remote work station bus respectively. The remote work station has an open bus architecture permitting access to bus signals at the remote terminal.

Fig. 1

EP 0 401 803 A2

## BACKGROUND OF THE INVENTION

### 1. Field of the Invention

This invention relates to the field of multi-user, time-share computing on a host computer. More particularly, this invention relates to computer systems for executing interactive high resolution graphic applications in a real time, multi-user environment.

### 2. Description of the Prior Art

Presently, users of personal computer systems such as the IBM PC-XT or AT series are unable to take advantage of the full capabilities of these machines. Multi-tasking and operating systems such as UNIX or XENIX allow multiple processes to be executed in a time-share manner which allows the user to more fully utilize the vast power of the central processor. Because, however, a great deal of application software is written for the DOS operating system in which there are limitations prevent full utilization of the central processor.

DOS application software requires memory and computer, input, output (I/O) devices to be accessible just as a standalone. Several applications programs can be run in a time-share manner by several users by simply extending the host bus to another terminal. The second terminal shares the CPU on the host in a time-share manner. However, because of bus propagation delay and skew, the second terminal would have to be in close proximity to the host machine.

Presently, a method used for executing application software from a remote terminal makes use of a high speed serial fiber optic link to transfer data at a 32 megabit per second rate to the remote terminal. At the remote terminal, high resolution graphics capability is built into the control board allowing the execution of graphic software at the host computer in a multi-tasking, multi-user mode.

There are several disadvantages associated with this technique. First, each remote terminal control board supports only one type of graphics option at each work station. This prevents a user from using more than one video displays each having different graphics options such as EGA, BGA, hercules, etc.

Second, because the graphic capability is built into the control board, the user must wait for a control board providing the new graphics options instead of being able to use an industry standard IBM PC-AT compatible graphics card. Since new graphics options must be first implemented on a custom chip on the graphics terminal control board, new graphics options are not available as fast as those that come out in having an AT bus compatible connector. The cost of graphics options implemented by a custom chip on the graphics terminal control board is greater than the cost of the AT compatible graphics board because the AT compatible graphics boards can take advantage of much higher volume manufacturing techniques to produce boards at lower cost.

Another technique for linking personal computer to permit multiple users to share both hardware and software is the use of a local area network (LAN). A LAN requires the host computer to transfer data through an interface card to a network. The interface card transfers data between interface cards each under local control. When an interface card on the LAN receives data for the host machine for which it is dedicated, that interface card must then initiate a data transfer to the host.

There are several disadvantages associated with this technique. First, LANs do not transfer data in real time. Data placed in the network does not get clocked in at the destination on the same bus cycle as it would have if the destination were local to the computer initiating the transfer. The LAN does not provide a good real time solution because there is a great deal of overhead on the network transfers between interface cards. This overhead involves source and destination addresses, for example, which are sent out along with the information which is being transferred between the host machines.

Second, a LAN is a general purpose solution for allowing multiple users to execute software on a time-share system, and therefore is expensive. To provide added flexibility, most LANs make use of software which is running on each of the network interface cards. Because LANs require both hardware and software development, they are usually expensive.

## SUMMARY OF THE INVENTION

The present invention provides a method and apparatus for electronically transferring high resolution video graphics data between a remote graphics terminal and a host computer having an AT bus type architecture. Because data is transferred between the host computer and the remote graphics terminal, fast enough for the application software, it appears to both the host and the remote graphics terminal they they are both tied physically to the same bus.

In one preferred embodiment, the apparatus used to implement the present invention is a transparent high speed serial link between the host bus and the remote bus. Parallel bus data is transformed to serial data and transmitted serially at 70 megabits per second or higher to a receiver which converts the serial data stream back to parallel form. The present invention allows multiple remote graphic work stations to operate interactively with the host computer in a real time, multi-tasking, multi-user environment.

BRIEF DESCRIPTION OF THE DRAWINGS

Fig. 1 is a block diagram of a remote graphics work station and the associated bus adaptor in the host computer.

Fig. 2 is a block diagram showing further detail of the data paths between the host computer and remote work station.

Fig. 3 is a block diagram of the host parallel bus to serial bus on the host bus adaptor.

Fig. 4 shows the command code decodes and detail of transfer between the host computer and remote work station.

Fig. 5 shows the I/O address mapping for the remote work stations.

Fig. 6 shows a block diagram of the serial bus receiver to reconstructed parallel remote work station bus logic at the remote work station.

Fig. 7 shows a block diagram of the remote work station bus to serial bus logic at the remote work station.

Fig. 8 is a block diagram of work station serial bus to host bus logic on the host bus adaptor.

DETAILED DESCRIPTION OF THE PREFERRED EMBODIMENT

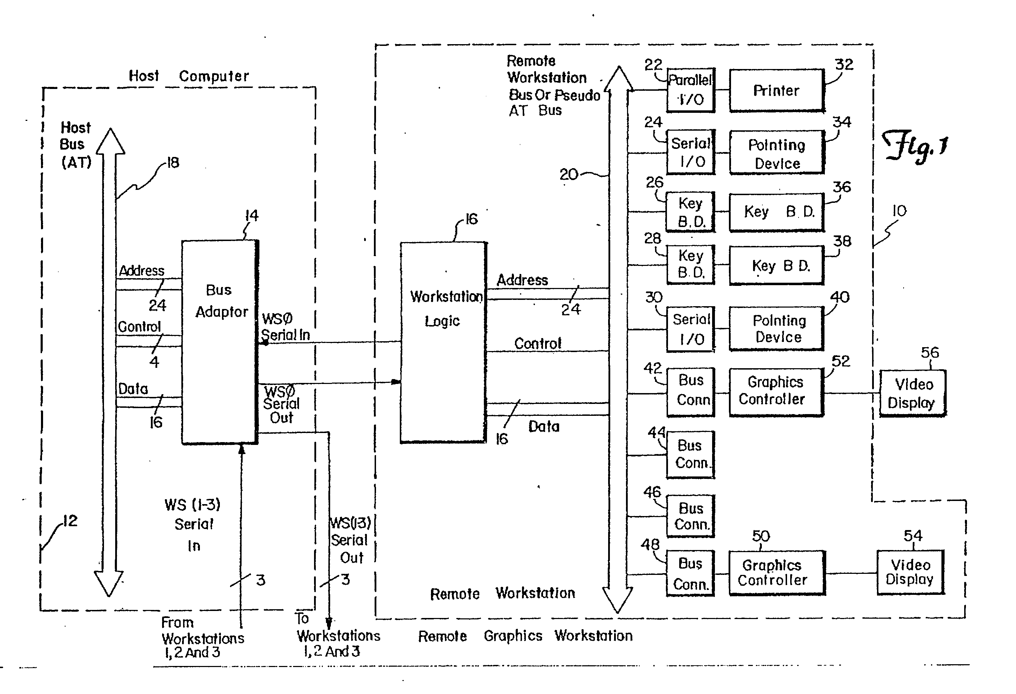

Fig. 1 is a block diagram of the remote graphics work station of this invention. The remote work station 10 transfers and receives address, data, and control information between itself and a host computer 12. The host computer 12 is a machine having a IBM PC-AT bus architecture and a resident multi-tasking operating system such as UNIX or XENIX. A multi-tasking operating system allows the host computer to time-share its CPU resources, which makes it possible for multiple users to execute application software on the same CPU. A bus adaptor 14 and work station logic 16 make it possible for a user at a remote work station 10 to appear to the host computer 12 to be physically attached and locally resident on the host bus 18.

The remote work station 10 is composed of work station logic 16, remote work station bus or pseudo-AT bus 20, interface cards 22, 24, 26, 28 and 30, input devices 32, 34, 36, 38 and 40, bus connectors 42, 44, 46 and 48, graphics controllers 50, 52 and video displays 54 and 56.

Specific interfaces and devices on the remote work station bus 20 typically includes a parallel interface 22 for a printer 32, serial interfaces 24 to 30 for pointing devices 34 and 40 such as a bit pad or mouse, and keyboard interfaces 26 and 28 for keyboards 36 and 38.

The remote work station 10 provides four standard AT bus type connectors 42, 44, 46 and 48 for the user to install one of a variety of IBM PC-AT compatible graphics controllers 50 and 52 for driving video displays 54 and 56 or any AT compatible expansion boards.

Address, data, and control information is passed between the remote work station 10 and the host computer 12 by converting this information from parallel form at the remote work station bus 20 and the host bus 18 to serial form which is transferred between bus adaptor 14 and work station logic 16. Parallel data links are not adequate for transferring data over substantial distances because of the cost of multi-conductor cables, crosstalk problems, RFI (radio frequency interference), bit-to-bit skew, and other concerns associated with multi-wire interface. Transferring data serially between work station logic 16 and bus adaptor 14 provides a simpler and less costly link between the remote work station 10 and the host computer 12.

At the host computer 12 the bus adaptor 14 fits into one of the standard IBM PC-AT card slots to interface with host bus 18. A bus adaptor 14 converts parallel address, control and data information from the host bus 18 designated to the remote work station to serially information and transmits this over a serial link to work station logic 16. Bus adaptor 14 supports up to four remote work stations 10 and therefore provides four serial output signals and receives four serial input signals.

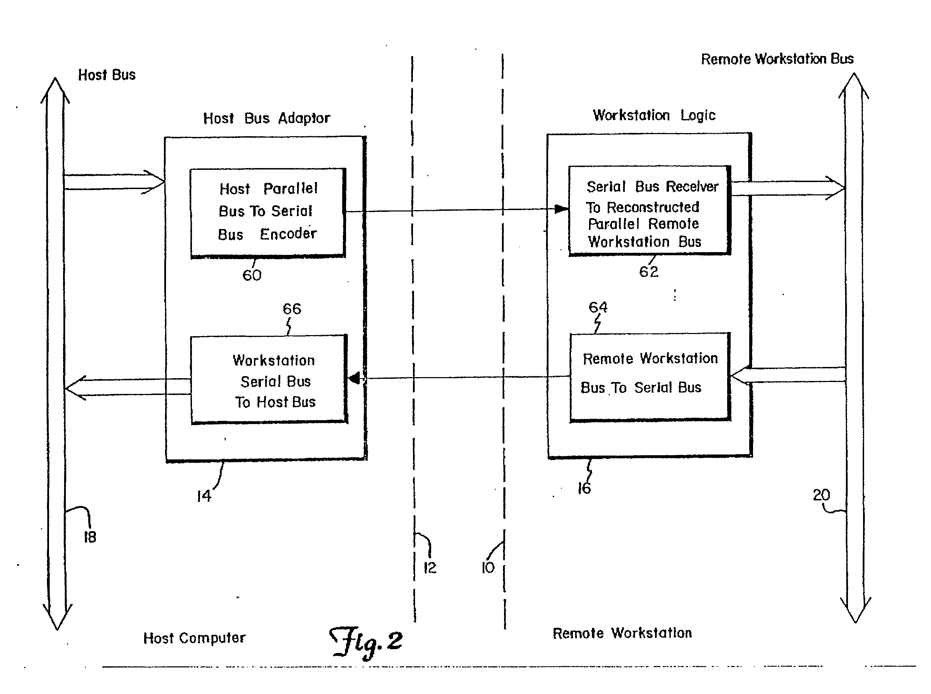

Fig. 2 shows further detail of the host bus adaptor 14 which resides in the host computer 12 and the work station logic 16 which resides in the remote work station 10. Address, data, and control information which is transferred from the host bus 18 of the host computer 12 is converted to serial information by the host parallel bus serial bus encoder 60 and then transmitted to the remote work station 10 where it is received by the serial bus receiver to reconstructed the parallel remote work station bus 62 logic. This logic 62 reconstructs the address data and command information to parallel form with the same timing as the AT bus architecture. This reconstructed data is then placed out on the remote work station bus 20.

A return path from the remote work station bus 20 within the remote work station 10 to the host computer 12 requires the parallel data from the remote work station bus 20 to be converted to serial bus data by the remote work station bus serial bus logic 64. Serial data from the remote work station bus to serial bus logic 64 is received by the work station serial bus to host bus logic 66 and reconstructed into a parallel format having the timing conforming to the AT bus architecture. This reconstructed data is placed out on the host bus 18 of the host computer 12.

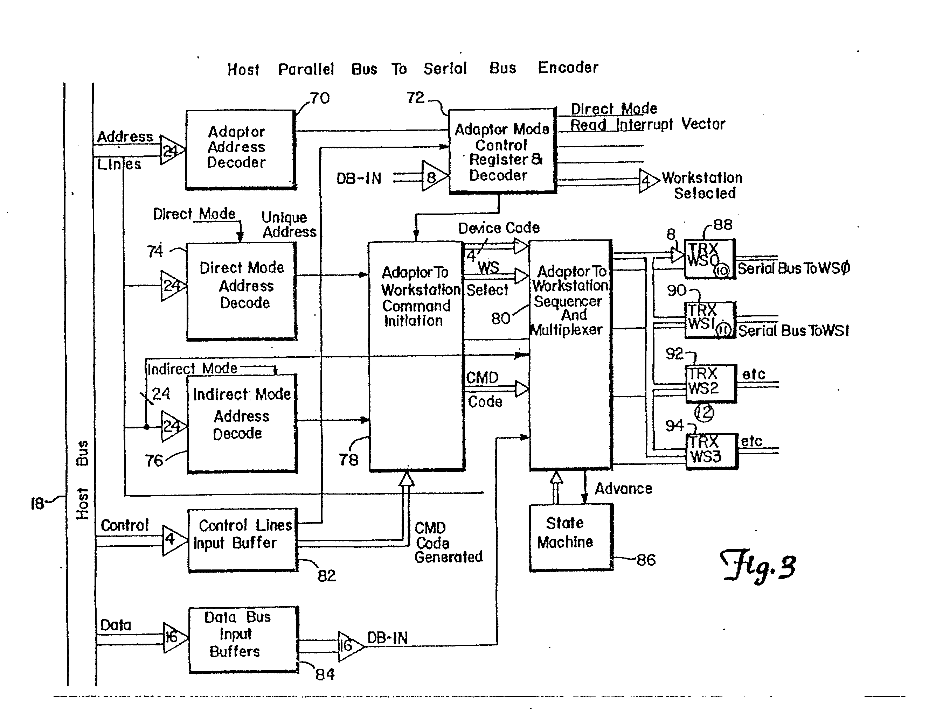

Fig. 3 shows the logic in the host bus adaptor 14 which encodes the parallel information from the host bus 18 into serial information for sending to the work station logic 16. The host parallel bus to serial bus encoder 60 is made up of adaptor address decoder 70, adaptor mode control register and decoder 72, direct mode address decode 74, and direct mode address decode 76, adaptor to work station command initiation 78, adaptor to work stations sequence and multiplexer 80, control line input buffer 82, data bus input buffers 84, state machine 86, and transmitter 88, 90, 92 and 94.

Adaptor address decoder 70 decodes the lower 16 bits of the address lines to determine if it is one of the unique addresses of the adaptor card which are preselectable by switches on the adaptor card. The host computer can address a particular adaptor card by sending the adaptor card address which is decoded by the adaptor address decoder 70 and enables the adaptive mode control register and decoder 72 to accept mode control information from the host computer 12 such as whether or not to allow interrupts, and whether or not the host will be using direct or indirect addressing mode.

When in direct mode, the address lines must be decoded by the direct mode address decode 74 for a unique host address for one of the 16 devices at each work station. When in indirect mode, address decode logic 76 must be used because the host has preselected a work station.

Control lines input buffer 82 is a receiver circuit for accepting control information from the host bus 18. Similarly data bus input buffers 84 are receivers for the 16 data bits on the host bus 18.

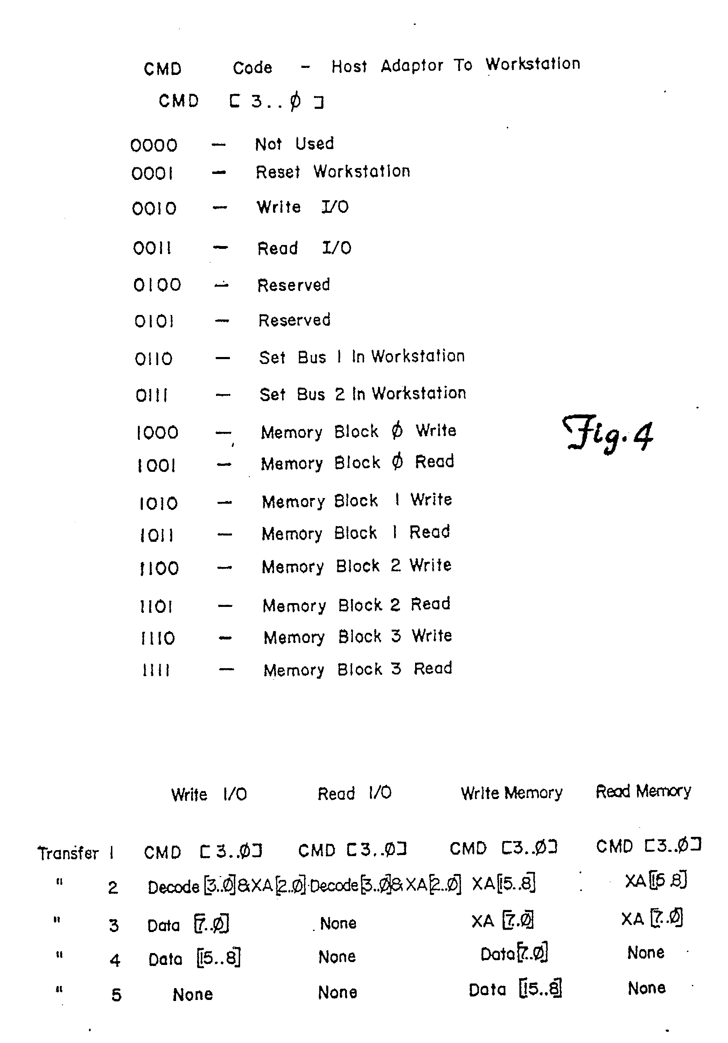

The adaptor to work station command initiation logic 78 receives a signal from the direct mode address decode logic 74 or indirect mode address decode logic 76 when the host is addressing one of the work station devices. The adaptor to work station command initiation logic 78 also receives the address of the work station the host wishes to communicate with from the direct mode address decode 74 logic. In addition, four bits of control information is received by the control lines input buffer 82 to initiate the start of the cycle to transfer data to the work station. A four bit command code is generated by the adaptor work station command initiation logic 78 from the 4-bit control information received by the control lines input buffer 82. The four bit command code is the first thing sent to the remote work station 10 to tell the work station what operation is going to be performed. Operations which may be performed are I/O write, memory write, I/O read or memory read. See Fig. 4 for a complete decode of the command code.

The adaptor to work station sequencer and multiplexor logic 80 receives the following information from the adaptor to work station command initiation logic 78 whether or not the host wishes to communicate with one of the work stations, the device code which tells which work station the host wishes to communicate with, and which command code to send over to the work station. The adaptor work station sequencer and multiplexer logic 80 begins sending information to the appropriate transmitters 88, 90 92 and 94 beginning with the command code first followed by up to four bits of information, in the case of a memory write the command code will be followed by four bytes address bits which in the case of a write will also be followed by four bytes of data (See Fig. 4) The transmitters in one preferred embodiment is the Advanced Micro Devices AM 7968 TAXI transmitter.

The transfer of data from the bus adaptor 14 to the work station logic 16 is controlled by a state machine 86. After every operation the state machine 86 is cleared.

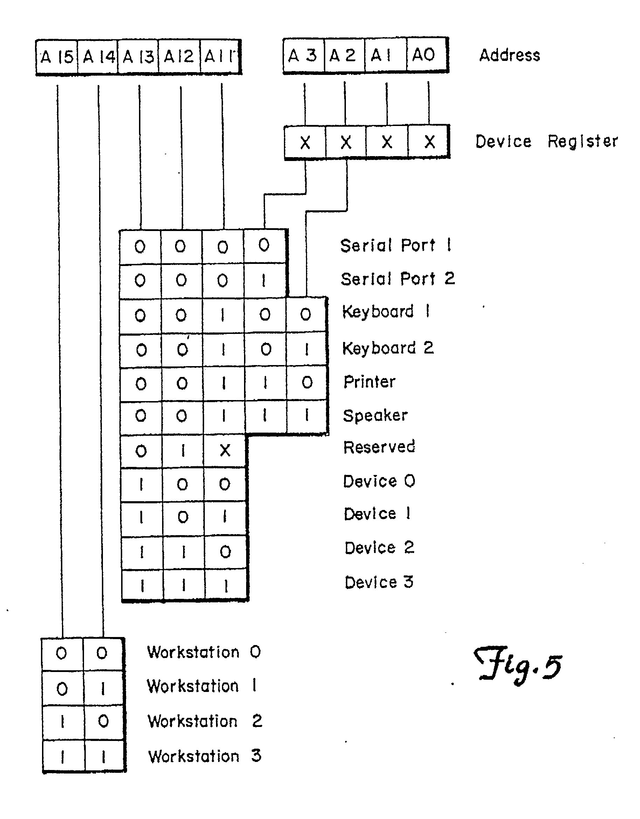

The four bit device code issues to define the device to which the host wishes to talk. The decode of the device bits are shown in Fig. 5.

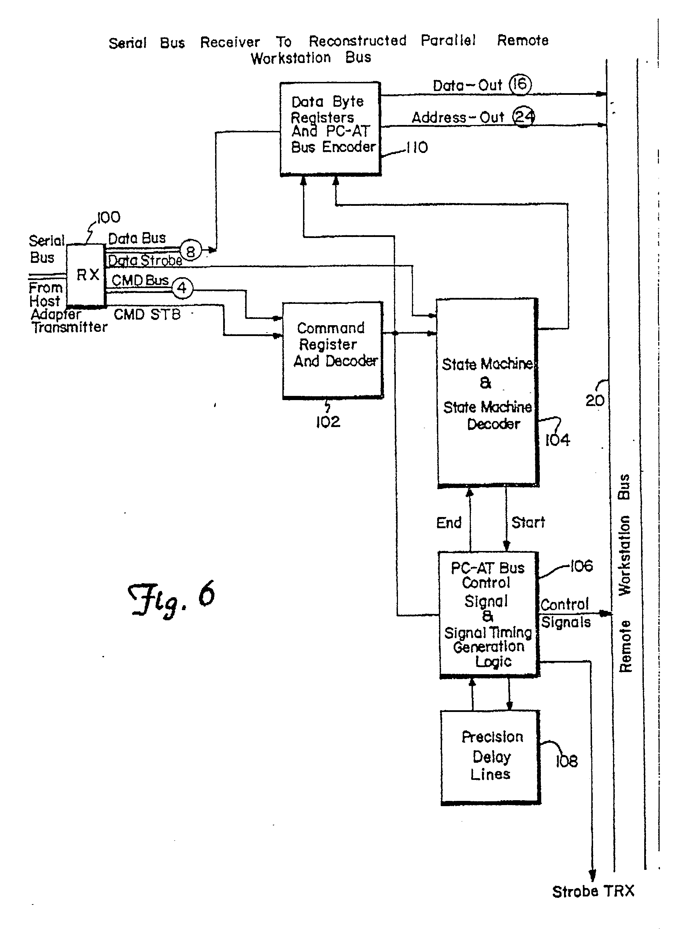

Fig. 6 shows further detail of the serial bus receiver to reconstructed parallel remote work station bus logic 62 shown in Fig. 2. This logic receives data, control and address information from the host computer in a serial format and reformats the data control and address information into a parallel format having the identical timing to the AT bus architecture and transmits this information on the remote work station bus 20.

The serial bus receiver to reconstructed parallel remote work station bus logic 62 is made up of a receiver 100, command register and decode logic 102, state machine and state machine decoder 104 PC-AT bus control signal and signal timing generation logic 106, decision delay lines 108, and data byte registers and PC-AT bus encoder 110.

The receiver 100 accepts the encoded data stream into a serial-to-parallel converter, which decodes and outputs the received data with the accompanying strobe signal. In one preferred embodiment the receiver 100 is the Advanced Micro Devices AM 7969 TAXI receiver. The receiver 100 provides a 8 bit data bus and a 4-bit command bus. Each bus has its own strobe associated with it. When the command strobe is active, the command register and decoder logic 102 stores the command code sent by the host computer, which tells what kind of information is coming over the bus and how many bits long it is. The command strobe initiates the state machine and state machine decoder 104. The state machine and state machine decoder 104 provides clocking information to the data byte registers and PC-AT bus encoder 110 in the correct order so as to reorganize the data in a AT bus format. As soon as the state machine and state machine decoder 104 receives the last data strobe expected for the type of transfer executed, a start signal is sent to the PT-AT bus control signal timing generation logic 106. The PC-AT bus control signal and signal timing generation logic 106 generates the control signals according to the precise timing required by the PC-AT bus architecture by using the precision delay lines of 108.

The strobe transmitter signal generated by the PC-AT bus control signal and signal timing generation logic 106 is used to enable the transmitter, which sends information back to the host computer.

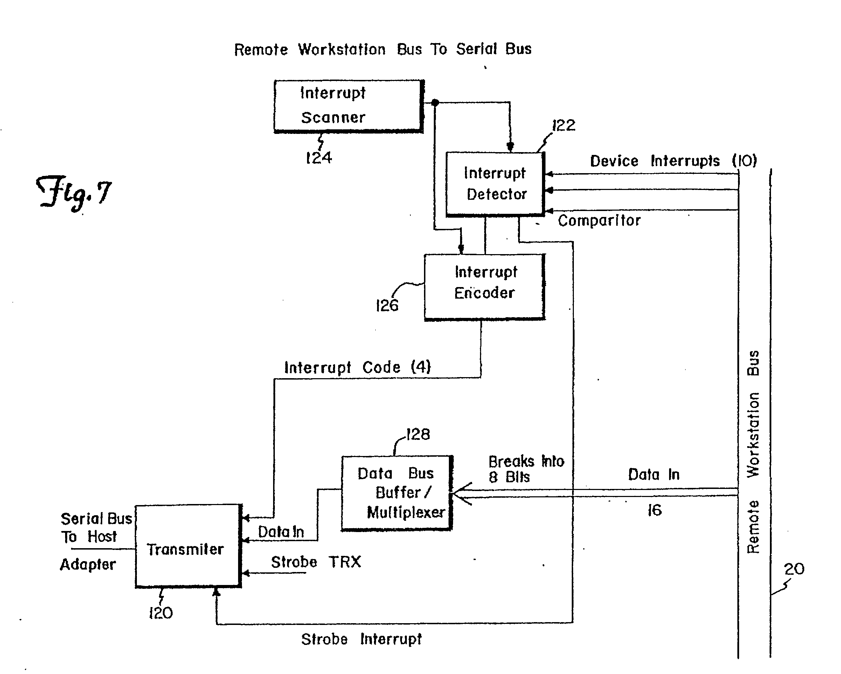

Fig. 7 is a block diagram of the remote work station bus to serial bus logic 64 which is used to convert the parallel address control and data on the remote work station bus 20 to serial information to be received by the host bus adaptor 14 on the host computer 12 shown in Fig. 2. The remote work station bus to serial bus logic consists of a transmitter 120, interrupt detector logic 122, interrupt scanner 124, interrupt encoder 126, and data bus buffer and multiplexer 128.

The interrupt detector 122 receives ten discrete device interrupt lines from the remote work station bus 20. These inputs are conditioned to eliminate glitches on the interrupt lines. Interrupt scanner 124 is a continuous counter with each count representing one of the discrete device interrupts. When the interrupt detector 122 detects an interrupt and the interrupt scanner 124 is at a scan count corresponding to that particular device interrupt, a signal is sent to the interrupt encoder 126. The interrupt encoder 23 sends out a 4-bit interrupt code corresponding to the particular work station which generated the interrupt. The interrupt detector 122 also generates a strobe interrupt signal which enables the transmitter 120 to initiate communication with the host computer 12 via the serial bus.

The transmitter 120 in one preferred embodiment is the Advanced Micro Devices AM7968 TAXI transmitter. The transmitter 120 latches the data to be transmitted encodes this data and passes it through a shift register to the media interface devices which charge the transmission lines.

Data bus buffers/multiplexer 128 takes the 16-bit data from the remote work station bus 20 and breaks it into 8-bit pieces compatible with the transmitter 120 input latch.

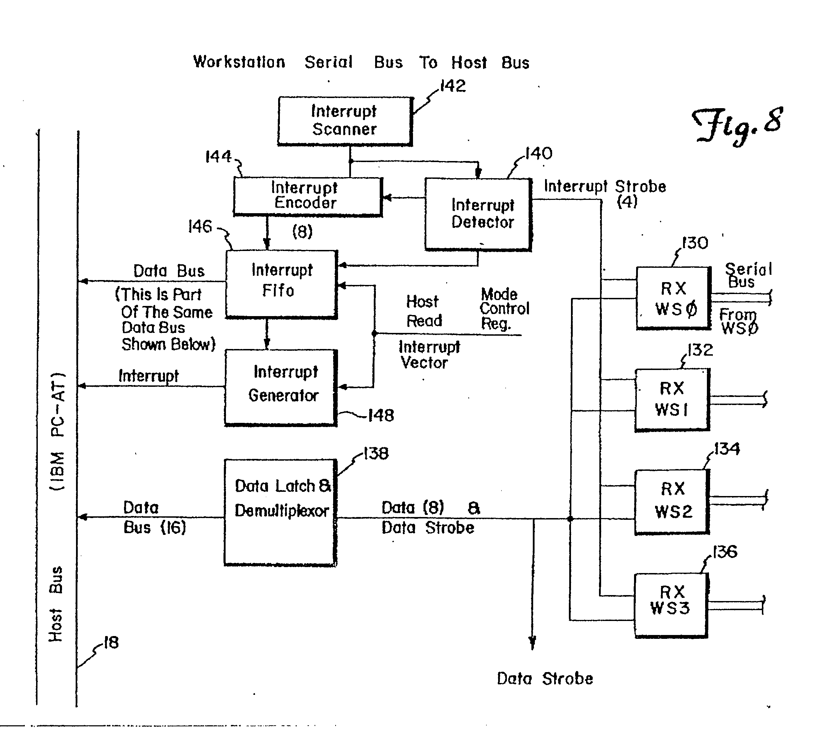

Fig. 8 is a block diagram on the work station serial bus to host bus logic 66 shown in Fig. 2, this logic takes the serial information received from the remote work station bus to serial bus logic 64 on the remote work station 10 and converts this to a parallel format having the same timing and organization as the IBM PC-AT bus architecture. Serial data received from the remote work station 10 after being converted to a format compatible with the AT bus architecture is then placed on the host bus 18 for the host computer 12. The work station serial bus to host bus logic 66 is made up of receiver logic circuits 130, 132, 134 and 136, data latch and the multiplexer logic 138, interrupt detector 140, interrupt scanner 142, interrupt encoder 144, interrupt FIFO 146 and interrupt generator logic 148.

The receiver circuits 130, 132, 134 and 136 accept the encoded data stream into a serial-to-parallel converter, and decode and output the received data with an accompanying strobe. In one preferred embodiment the receiver logic circuit 130, 132, 134 and 136 are the Advanced Micro Devices AM7969 TAXI receiver.

Each of the receivers 130, 132, 134 and 136 go to a separate remote work station. The data latch and the multiplexer logic 138 latches the 8-bit data from the receivers 130, 132, 134 and 136. The data latch and the multiplexer logic 138 will also format this 8-bit data into a 16-bit data bus compatible with the AT bus architecture 18.

Because there are ten discrete interrupt lines from each work station, the work station serial bus to host bus logic 66 can potentially receive one to forty unique interrupts. The interrupt detector 140 receives an interrupt strobe and 4-bit code from one of the receivers 130, 132, 134 and 136 when a work station has generated an interrupt. The interrupt scanner 142 scans through each work station continuously looking for an interrupt. When the interrupt scanner 142 detects an interrupt from the particular work station that it is presently scanning the interrupt encoder 144 is enabled. Interrupt FIFO 146 receives a 4-bit code from the interrupt encoder 144 which represents the work station that has the interrupt. In addition, interrupt FIFO 146 receives a 4-bit code from the interrupt detector 140 which identifies which one of the sixteen devices at the work station has created the interrupt. Once the interrupt is stored in the interrupt FIFO 146, the interrupt is cancelled and the device which generated the interrupt cannot generate another interrupt until the previous interrupt has been serviced.

Interrupt generator 148 is enabled by the interrupt FIFO 146 whenever there is data in the FIFO. After an interrupt has been generated by the interrupt generator 148 on the host bus 18, the host computer 12 services the interrupt by reading the interrupt vector from the interrupt FIFO 146 to determine which device at which work station has generated the interrupt. After the interrupt vector is read from the interrupt FIFO 146, that particular interrupt is cleared from the interrupt FIFO 146.

The present invention is a low cost solution then previous methods of dealing with a remote work station for a real time multi-tasking environment where users are executing DOS applica tions. The present invention is lower cost because the hardware is simplified by not requiring software or hardware control to avoid resource conflicts resulting from a data link having a transfer rate less than that of the IBM PC-AT bus architecture capabilities. Another reason the present invention is less costly is because it takes advantage of high production industry standard graphics controllers in the remote work station. The remote work station has standard IBM PC-AT type expansion board card slots allowing graphics controllers made by multiple vendors to be installed by the users to drive their video display terminals.

The present invention also allows each remote work station to not only using industry standard graphics controllers but also provides the user at the remote work station with multiple slots to install up to four graphics controllers allowing more than one video displays to be used for certain applications. The extra connectors also allow the user at the remote work station to install specialized resources such as extended memory, math coprocessors, etc. at the remote work station.

Although the present invention has been described with reference to preferred embodiments, workers skilled in the art will recognize that changes may be made in form and detail without departing from the spirit and scope of the invention.

**Claims**

1. A remote terminal for interactive use in a multi-user, time-shared environment with a host computer, wherein the improvement comprising:
a serial-to-parallel circuit for communicating with the host computer over a transmission medium;
a remote terminal bus connected to the serial-to-parallel circuit;
a plurality of non-dedicated bus interface connectors, each connected to the remote terminal bus to provide open architecture to permit an access to bus signals on the remote terminal bus.

2. The remote terminal of claim 1 wherein:
the remote terminal bus has an IBM PC-AT compatible bus architecture; and
the interface connectors are IBM PC-AT compatible bus interface connectors.

3. The remote terminal of claim 1 and further comprising:
a graphics controller card connected to at least one of the plurality of interface connectors.

4. The remote terminal of claim 3 and further comprising:
an input device connected to the remote terminal bus.

5. The remote terminal of claim 4 and further comprising:
a printer connected to the remote terminal bus.

6. A system for permitting interactive use in a multi-user, time-shared environment with a host computer, the system comprising:
a bus adaptor connected to a host bus of the host computer for interfacing the host bus with a high speed serial data link; and
a remote terminal which includes:
a remote terminal bus;
an interface circuit for interfacing the remote terminal bus to the high speed serial data link so that bus signals on the host bus are recreated on the remote terminal bus; and
a plurality of non-dedicated bus interface connectors connected to the remote terminal bus to provide an open architecture to permit access to signals on the remote terminal bus.

7. The system of claim 6, wherein the host bus and the remote terminal bus have industry-standard bus architectures.

8. The system of claim 7 wherein the host bus and the remote terminal bus each have an IBM PC-AT compatible bus architecture.

9. The system of claim 6 wherein the host bus and the remote terminal bus have essentially identical bus architectures.

10. The system of claim 6 wherein the remote terminal further comprises:
a plurality of graphics controller cards, one each being connected to one of the plurality of bus interface connectors.

11. The system of claim 10 wherein the remote terminal further comprises:
a printer connected to the remote terminal bus; and
a plurality of input devices connected to the remote terminal bus.

12. A remote terminal for use with a host computer in a real time, multi-tasking environment for graphics applications comprising:
a remote bus;
means for providing signals received from a host bus of the host computer to the remote bus;

means for transmitting data and command information from the remote bus to the host bus;

means for displaying video graphic information based upon signals on the remote bus; and

means for providing an open architecture at the remote terminal.

13. A remote terminal system for a host computer having a multi-tasking operating system and a host bus, the remote terminal system comprising:

a high-speed serial interface for the host computer, wherein more than one high-speed serial channel is available for transferring data and command information between the host computer and at least one remote terminal;

a remote bus at the remote terminal;

a high-speed serial interface to the remote bus for transferring data and command information between the remote bus and the host bus;

a parallel interface to the remote bus for transferring data to a printer;

a serial interface to the remote bus for transferring information to a pointing device;

at least one keyboard interface to the remote bus for transferring data to and from a keybaord; and

a connector for interfacing bus compatible graphics controllers to the remote bus, and thereby to the host bus, wherein the connector is capable of accommodating more than one type of graphics controllers.

Fig.1

Host Computer

Host Bus (AT)

18

Address
24
Control
4
Data
16

Bus Adaptor

14

WSØ Serial In

WSØ Serial Out

12

WS (1-3) Serial In

WS(1·3) Serial Out

3

3

From Workstations 1,2 And 3

To Workstations 1,2 And 3

Remote Workstation Bus Or Pseudo AT Bus

22  Parallel I/O     Printer  32

24  Serial I/O     Pointing Device  34

26  Key B.D.     Key B.D.  36

28  Key B.D.     Key B.D.  38

30  Serial I/O     Pointing Device  40

42  Bus Conn.     Graphics Controller  52     Video Display  56

44  Bus Conn.

46  Bus Conn.

48  Bus Conn.     Graphics Controller  50     Video Display  54

Workstation Logic

16

Address
24
Control
Data
16

20

10

Remote Workstation

Remote Graphics Workstation

EP 0 401 803 A2

Host Bus

Remote Workstation Bus

Host Bus Adaptor

Workstation Logic

Host Parallel Bus To Serial Bus Encoder

60

Serial Bus Receiver To Reconstructed Parallel Remote Workstation Bus

62

66

64

Workstation Serial Bus To Host Bus

Remote Workstation Bus To Serial Bus

14

16

18

12

10

20

Host Computer

Remote Workstation

Fig. 2

EP 0 401 803 A2

Host Parallel Bus To Serial Bus Encoder

Fig. 3

EP 0 401 803 A2

CMD    Code  —  Host  Adaptor  To  Workstation

CMD  [ 3 .. $\phi$ ]

0000  —  Not  Used

0001  —  Reset  Workstation

0010  —  Write  I/O

0011  —  Read  I/O

0100  —  Reserved

0101  —  Reserved

0110  —  Set  Bus  1  In  Workstation

0111  —  Set  Bus  2  In  Workstation

1000  —  Memory  Block  $\phi$  Write

1001  —  Memory  Block  $\phi$  Read

1010  —  Memory  Block  1  Write

1011  —  Memory  Block  1  Read

1100  —  Memory  Block  2  Write

1101  —  Memory  Block  2  Read

1110  —  Memory  Block  3  Write

1111  —  Memory  Block  3  Read

*Fig. 4*

| | | Write I/O | Read I/O | Write Memory | Read Memory |
|---|---|---|---|---|---|
| Transfer | 1 | CMD [3..$\phi$] | CMD [3..$\phi$] | CMD [3..$\phi$] | CMD [3..$\phi$] |
| " | 2 | Decode[3..$\phi$]&XA[2..$\phi$] | Decode[3..$\phi$]&XA[2..$\phi$] | XA[15..8] | XA[15..8] |
| " | 3 | Data [7..$\phi$] | None | XA [7..$\phi$] | XA [7..$\phi$] |
| " | 4 | Data [15..8] | None | Data[7..$\phi$] | None |
| " | 5 | None | None | Data [15..8] | None |

| A 15 | A 14 | A 13 | A 12 | A 11 | | A 3 | A 2 | A 1 | A0 | Address |

Device Register: | X | X | X | X |

| | | | | |
|---|---|---|---|---|
| O | O | O | O | Serial Port 1 |
| O | O | O | 1 | Serial Port 2 |
| O | O | 1 | O | O | Keyboard 1 |
| O | O | 1 | O | 1 | Keyboard 2 |
| O | O | 1 | 1 | O | Printer |
| O | O | 1 | 1 | 1 | Speaker |
| O | 1 | X | | Reserved |
| 1 | O | O | | Device 0 |
| 1 | O | 1 | | Device 1 |
| 1 | 1 | O | | Device 2 |
| 1 | 1 | 1 | | Device 3 |

| | | |
|---|---|---|
| O | O | Workstation 0 |
| O | 1 | Workstation 1 |
| 1 | O | Workstation 2 |
| 1 | 1 | Workstation 3 |

Fig.5

Serial Bus Receiver To Reconstructed Parallel Remote Workstation Bus

*Fig. 6*

Remote Workstation Bus To Serial Bus

*Fig. 7*

EP 0 401 803 A2

Workstation Serial Bus To Host Bus

*Fig. 8*

EP 0 401 803 A2